# EUROPEAN PATENT APPLICATION

(11) **EP 3 181 213 A1**
(43) Date of publication of application: **21.06.2017**
(21) Application number: 15003614.3
(22) Date of filing: 18.12.2015
(51) Int. Cl.: B01D 53/64

(54) **MERCURY CAPTURE SYSTEM FROM FLUE GASES GENERATED IN A POWER PROCESS OF COAL BURNING**

(30) Priority: 14.12.2015 PL PL
(71) Applicant: PGE Górnictwo | Energetyka Konwencjonalna S.A., 97-400 Belchatow (PL)
(72) Inventor: JÓZWIK, Krzystof, 92-434 Lodz (PL); KRYTOWICZ, Wladyslaw, 91-356 Lodz (PL); PODSEDKOWSKI, Leszek, 90-451 Lodz (PL); MAGIERA, Radomir, 95-200 Pabianice (PL); OBIDOWSKI, Damian, 90-020 Stroza (PL); REOROWICZ, Piotr, 91-465 Lodz (PL); SOBCZAK, Krzysztof, 90-348 Lodz (PL); SZYNKOWSKA, Malgorzata, 91-360 Lodz (PL); WRÓBLEWSKI, Piotr, 91-083 Lodz (PL)
(74) Representative: Passowicz, Marek

(57) **Abstract**

The flue gas mercury capture system for coal combustion plants constitutes a set of tubular connections with mercury sorbent, preferably made of a multi-layer composite material consisting of a carrier core (made of metal or alloy based on transition metals), on the both sides of which the following layers are applied: an insulating layer of a transition metal nitride and an external sorbing layer made of a mixture of transition metals sulfides and nitrides. The inlet part (A) with an elbow fitting is connected via the fan (B) with the working duct (C). The working duct (C) is fitted with two connectors: diffuser at the inlet (C1) and confusor at the outlet (C7) with the slide valve (C8). The working duct (C) accommodates the loading and unloading part (D) with the loading mechanism (C2) and the unloading mechanism (C4), between which the capture duct (C3) is positioned.

## Description

The invention relates generally to installations for removing mercury from flue gases and, more particularly, to a mercury capture system comprising a mercury sorbent for use in the coal combustion plants.

Mercury present in the atmosphere originates also from anthropogenic emission sources. Coal combustion is the most important of those sources. Currently, the largest emitters of mercury are coal and lignite-fired power plants and CHP plants. High mercury emissions are caused by the specific structure of heat and electricity carriers. In 2013 in Poland, approximately 50% of electricity was generated from coal combustion, and another 34% from lignite combustion. In the same year globally, the total share of electricity generated from both coal and lignite combustion was approximately 40%. Reduction of mercury emissions to the atmosphere constitutes an important issue in contemporary environmental protection due to mercury's high toxicity and ability to accumulate in living organisms. The question of mercury emissions is addressed by the legislation of the European Union. Stricter emission standards and a greater role of BATs should contribute to reduced atmospheric emissions of mercury from coal combustion in Europe.

"Ecomanager" (issue 2012-11) describes adsorption methods of mercury removal from flue gas. Such methods are highly efficient due to the affinity of mercury vapors for a large number of different adsorbents.

Mercury removal from flue gas can be ensured by adsorbent injection, following which spent adsorbent is removed in dust removal systems (electrostatic precipitators or fabric filters).

Mercury adsoprtion takes place also while the flue gas stream passes through an adsorbent bed of appropriate grain size. Activated carbon is the most commonly used adsorbent for flue gas mercury. Other adsorbents used for mercury emission reduction include limestone and sodium adsorbents, as well as loam, zeolite, limestone adsorbents and silicon-limestone adsorbents.

The efficiency of mercury adsorption processes depends on temperature, flue gas composition, contact time, physical and chemical properties of adsorbent surface, as well as mercury concentration in flue gas. Adsorbent efficiency in removing mercury from flue gas can be increased by impregnation with sulfur, precious metals, iodine, chlorine and bromine.

Simultaneous application of flue gas desulfurization (FGD) and electrostatic precipitation (ESP) combined with adsorbent (activated carbon) injection results in mercury removal rates above 95%⁸. According to US EPA, for carbon filter beds said efficiency is 80 to 90%.

Patent specification PL 387124 (2009) teaches a method of mercury and nitrogen oxides removal from flue gas wherein water is injected to the flue gas duct upstream of the desulfurization system, whereby the water reduces the temperature of flue gases to 55-65°C, causing H₂SO₃ droplets to form upstream of the absorber, which is accompanied by a reduction of SO₂ level in treated flue gas. The reduction of flue gas temperature allows for NO oxidation to NO₂ by the oxidizing agent (H₂O₂, O₃, ClO₂). Drops of nitric acid along with drops of H₂SO₃ are carried to the absorber, where they react with CaCO₃. Nitric acid formed in the said reactions oxidizes mercury contained in the flue gas.

Patent specification US 4,094,777 (1978) teaches a method of mercury absorption from a gas or a liquid, using a bed consisting of copper sulfide on various matrices (silica, aluminum oxide, silica-aluminum oxide, silicates, aluminates, silicates-aluminates).

Patent specification US 7,858,061 (2010) teaches a method for removing mercury from the gaseous phase using oxidative sorbents including one or two silicates (e.g. montmorillonite, mica, kaolinite, zeolites, etc.) and an appropriate active metal cation (preferably selected from the following: CuCl, CuBr, CuCl₂, CuBr₂, CuSO₄, FeCl₂, FeCl₃, FeSO₄, Fe₂(SO₄)₃, ZnCl₂, ZnBr₂, NiCl₂ and NiSO₄).

Patent specification US 7,507,083 (2012) teaches a method of reducing mercury emissions from coal combustion with sorbent compositions containing halide, calcium, aluminum and silicon at different stages of the coal combustion process. The sorbents, i.e. calcium bromides, can be added before coal combustion, whereas other components can be added to combustion gases.

Patent specification US 8,236,185 (2012) teaches a method for capturing mercury with red clay sulfidized by means of compounds including H₂S, Na₂S, K₂S, (NH₄)₂S and CaSₓ and containing hydrated iron oxides.

Patent applications Nos. US 2010/0018395, US 2009/01 17019 and US 2009/0062119 teach methods for capturing mercury from gases by injection of sorbents based on activated carbon with the surface modified by impregnation with chlorine, iodine or bromine compounds, selenium or ZnCl₂, which absorb mercury and are removed in dust collectors together with fly ash.

Polish Patent Application No. P.401501 (2012) (WO 2014/073996 A1) teaches a multi-layer composite material for reverse sorption of mercury from coal flue gas, consisting of a carrier core (made of metal or alloy based on transition metals), on the both sides of which the following layers are applied: an insulating layer of a transition metal nitride and an external sorbing layer made of a mixture of transition metals sulfides and nitrides.

The essence of the system according to this invention is that the inlet part with an elbow fitting is connected via a fan with the working duct fitted with two connectors, a diffuser at the inlet, a confusor at the outlet and a slide valve, whereas the working duct includes the loading and unloading part with loading and unloading mechanisms, between which the capture duct is positioned.

Preferably, the inlet part is fitted with a flue gas cooler/heater positioned upstream of the fan.

Preferably, the inlet part is fitted with a Venturi tube.

The purpose of the mercury capture system dedicated to flue gas generated during coal combustion is to direct flue gas to a technological system which - through direct contact of flue gas with a sorbent - allows for mercury capture. Subsequently, treated flue gas returns to the main flue gas duct. The technological system consists of equipment ensuring pressure loss compensation, flue gas temperature adjustment to a level ensuring an efficient sorption process, as well as necessary measurements for monitoring the system's performance. An important innovative feature is the fact that the system combines known equipment that perform specifically defined tasks and whose technological arrangement is not used in other solutions.

For a more complete understanding of the invention, reference should be made to the embodiment presented on the drawing, wherein:
- Fig. 1: is a schematic of a mercury capture system dedicated to flue gas generated during lignite combustion (side perspective view),
- Fig. 2: is the working duct of the system (top perspective view),
- Fig. 3: is a loading tray for sorbent carrier package (the schematic shows only part of metal sheets (carriers) in order to show all package components) (side perspective view),
- Fig. 4: shows geometrical configuration of metal sheets in the sorbent carrier package;
- Fig. 5: is the sorbent carrier (side perspective view)
a) carrier surface development by means of sand or shot blasting;
b) carrier surface development by means of embossing of horizontal corrugations;
- Fig. 6: is the sorbent carrier (side perspective view), Carrier surface structure of non-continuous structure - turbulators in the form of cut-outs and creases:
a) double-sided deflections, wherein the deflected part constitutes only a fragment of the cut-out element,
b) double-sided one-way deflections, wherein the deflected part constitutes the entire cut-out element.

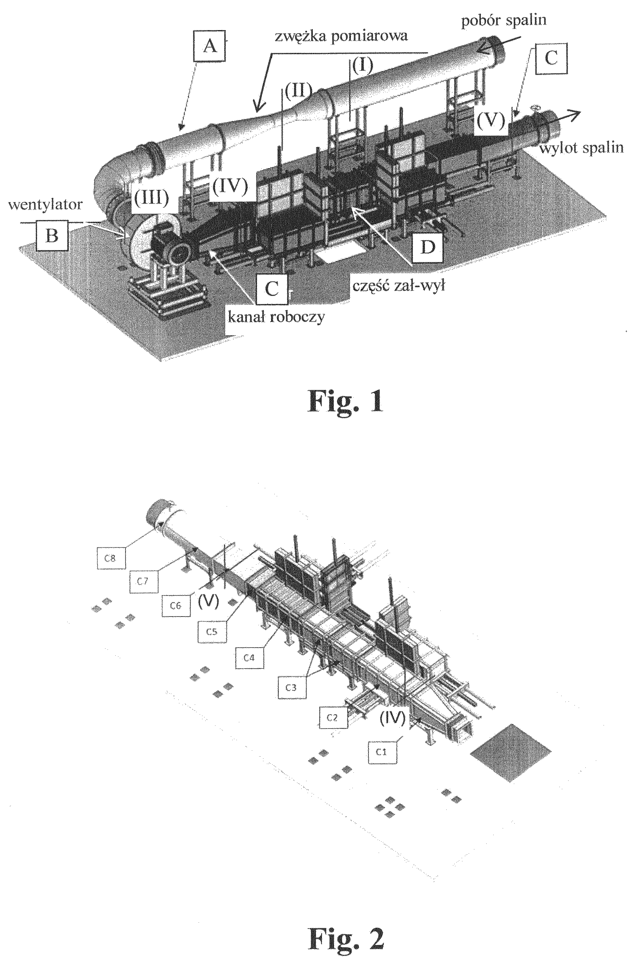

Key to drawing figures:
- "A" -: inlet part fitted with a Venturi tube. This part also accommodates a 90-degree elbow fitting and optionally a flue gas cooler/heater positioned upstream of the fan;
- "B" -: fan with a drive, controlled by means of an inverter;
- "C" -: working duct together with connectors: diffuser at the inlet (C1), confusor at the outlet (C7) and slide valve (C8) (fig. 2);
- "D" -: loading and unloading part allowing for sorbing material package replacement and relocation inside the capture duct;
- "C1" -: diffuser at the inlet (flow-through segment with gradually increasing square cross-section);
- "C2" -: unloading mechanism;
- "C3" -: capture duct;
- "C4" -: loading mechanism;
- "C5" -: terminating segment of the capture duct;
- "C6" -: intermediate segment;
- "C7" -: confusor at the outlet (flow-through segment with gradually decreasing round cross-section);
- "C8" -: slide valve;
- "1" -: package housing;
- "2" -: sorbent carrier sheet metal guides;
- "3" -: sorbent carrier sheet metal package.

The flue gas mercury capture system for coal combustion plants constitutes a set of tubular connections, wherein the inlet part A with an elbow fitting is connected via the fan B with the working duct C. The working duct C is fitted with two connectors: diffuser at the inlet C1 and confusor at the outlet C7 with the slide valve C8. The working duct C accommodates the loading and unloading part D with the loading mechanism C2 and the unloading mechanism C4, between which the capture duct C3 is positioned. Furthermore, the inlet part A (upstream of the fan B) a flue gas cooler/heater is installed.

In the flow-through part, five control and measuring sections are defined:
- section located mid-length of the cylindrical inlet part of the Venturi tube (fig. 1);
- section located mid-length of the Venturi tube (fig. 1)
- section at the fan inlet (downstream of the optional flue gas cooler);
- section at the fan outlet - in fact this section is located downstream of the diffuser C1, mid-length between the diffuser outlet and the first flange of the constant cross-section duct connecting segments C1 and C2 (fig. 2);
- outlet section (upstream of the slide valve C8), located mid-length of the segment C6, positioned between the working area of the system and the intermediate segment C7 (fig. 2).

The purpose of the flow-through part of the system is to ensure flue gas flow from the intake point to the working duct (where mercury sorption process takes place) and subsequently back to the main flue gas duct. Flue gas flow in the capture system is induced by a variable speed radial fan positioned over the working duct of the system.

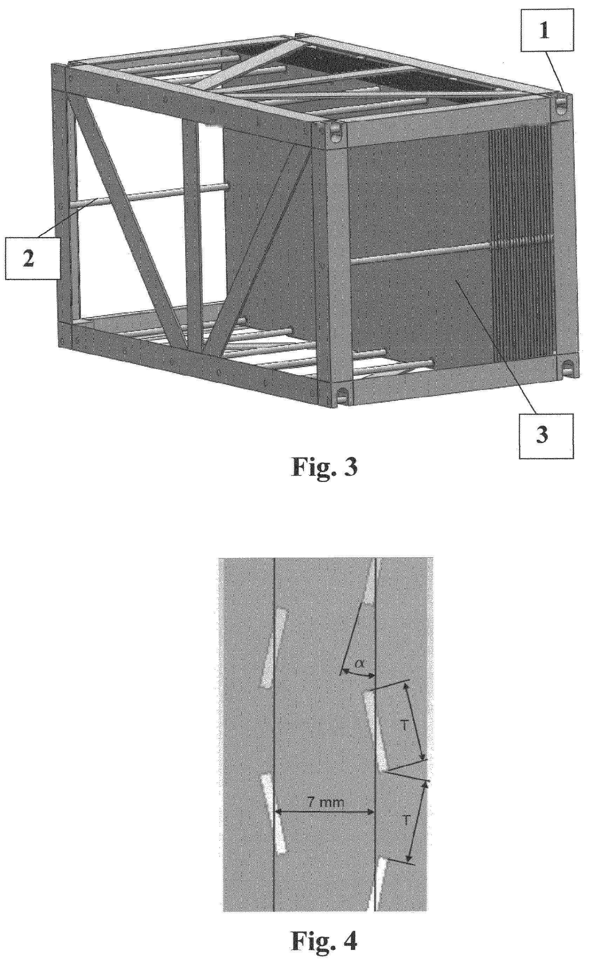

The working duct accommodates the section D - loading and unloading part (fig. 1), consisting of the loading system C4 (fig. 2). The loading system C4 consists of part of a duct where flue gas flows through spaces enclosed by sorbing systems and of a system of locks, auxiliary loading chambers and actuators allowing for loading a tray with a "fresh" package (fig. 3) to the capture duct C3 (fig. 2), where sorbing packages are relocated during loading and unloading. Flue gas passes through sorbing packages in spaces enclosed by sorbing systems. The section D also consists of the unloading system C2 (fig. 2) consisting of part of the duct where flue gas flows through spaces outlined by sorbing systems and of a system of locks, auxiliary loading chambers and actuators allowing for unloading "spent" packages and moving them from the duct to the unloading chamber and then outside the system of chambers and locks.

The capture system was fed with lignite combustion flue gas flowing at a linear velocity. The flue gas composition was as follows: 10-12% of steam; 0.01% of SO₂; 10% of CO₂; 25-30 µg/m³ of Hg. Flue gas composition was not analyzed at the system outlet. At the research stage sorption capacity (8m/s and/or 12m/s) was the only metrics.

The package installed in the system had the following geometry:
- basic dimensions: height: 0.5 m; width: 0.5 m; length: 1 m
- distance between sorption sheets: 7 mm (distance between sheets' axes of symmetry)

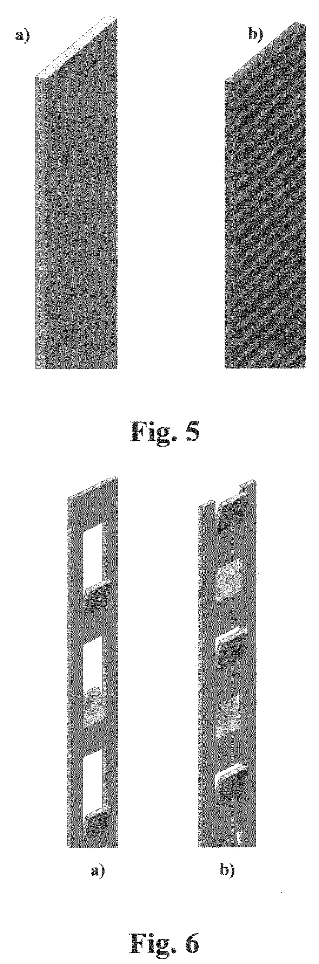

For such configurations the following sorption results were obtained:
1) For sheets shaped as per fig. 5 (sorption value (mg) of absorbed mercury per 1kg of shees)

| | Fig. 5a | | Fig. 5b | |
|---|---|---|---|---|
| | inlet | outlet | inlet | outlet |
| V = 8m/s | 76 | 25 | 432 | 386 |
| V = 12m/s | 240 | 210 | 510 | 440 |

2) For sheets shaped as per fig. 6a (sorption value in mg of absorbed mercury per 1kg of sheet)

| | T = 6mm | | T = 12 mm (distance between sheets: 10mm) | |
|---|---|---|---|---|
| | α = 10° | α = 15° | α = 10° | α = 15° |
| V = 8m/s | 800 | 980 | 560 | 1010 |
| V = 12m/s | 13600 | 1520 | 1270 | 1810 |

3) For sheets shaped as per fig. 6b (sorption value in mg of absorbed mercury per 1kg of sheet)

| | T = 7mm | | T = 12mm | |
|---|---|---|---|---|
| | α = 10° | α = 15° | α = 10° | α = 15° |
| V = 8m/s | 780 | 920 | 650 | 710 |
| V = 12 m/s | 1060 | 1250 | 870 | 1110 |

## Claims

1. The mercury capture system from flue gases generated in a power process of coal burning for use in the coal combustion plants, comprising a set of tubular connections with mercury sorbent, preferably made of a multi-layer composite material consisting of a carrier core (made of metal or alloy based on transition metals), on the both sides of which the following layers are applied: an insulating layer of a transition metal nitride and an external sorbing layer made of a mixture of transition metals sulfides and nitrides, **wherein** the inlet part (A) with an elbow fitting is connected via the fan (B) with the working duct (C), whereas the working duct (C) is fitted with two connectors: diffuser at the inlet (C1) and confusor at the outlet (C7) with the slide valve (C8) and additionally accommodates the loading and unloading part (D) with the loading mechanism (C2) and the unloading mechanism (C4), between which the capture duct (C3) is positioned.

2. The system according to claim 1, **characterized in that** the inlet part (A) is fitted with a flue gas cooler/heater positioned upstream of the fan (B).

3. The system according to claim 1 or 2, **characterized in that** the inlet part (A) is fitted with a Venturi tube.
